# EUROPÄISCHE PATENTSCHRIFT

(11) **EP 2 637 826 B1**
(45) Veröffentlichungstag und Bekanntmachung des Hinweises auf die Patenterteilung: **02.09.2015**
(21) Anmeldenummer: 11767725.2
(22) Anmeldetag: 12.10.2011
(51) Int. Cl.: B25F 5/00

(54) **HANDWERKZEUGMASCHINE MIT EINER SPINDELLOCKVORRICHTUNG**
HANDHELD MACHINE TOOL HAVING A SPINDLE LOCKING APPARATUS
MACHINE-OUTIL À MAIN COMPORTANT UN DISPOSITIF DE BLOCAGE DE BROCHE

(30) Priorität: 11.11.2010 DE 102010043746
(43) Veröffentlichungstag der Anmeldung: 18.09.2013
(73) Patentinhaber: Robert Bosch GmbH, 70442 Stuttgart (DE)
(72) Erfinder: SAUR, Dietmar, 72810 Gomaringen (DE)
(86) Internationale Anmeldenummer: PCT/EP2011/067797
(87) Internationale Veröffentlichungsnummer: WO 2012/062521

(56) Entgegenhaltungen:
- EP-A2- 2 627 483
- WO-A1-2010/079002
- DE-A1- 3 234 254
- GB-A- 2 420 166

## Beschreibung

### Stand der Technik

Die vorliegende Erfindung betrifft eine Handwerkzeugmaschine gemäß dem Oberbegriff des Patentanspruchs 1 mit einem Werkzeuggehäuse, in dem ein Getriebe zur Übertragung eines von einem Antriebsmotor erzeugten Drehmoments auf eine Antriebsspindel angeordnet ist, der eine Spindellockvorrichtung zugeordnet ist. Eine derartige Handwerkzeugmaschine geht beispielsweise aus der GB 2 420 166 A hervor.

Aus dem Stand der Technik sind derartige Handwerkzeugmaschinen bekannt, bei denen eine mit einer Spindellockvorrichtung versehene Antriebsspindel in einem Werkzeuggehäuse an zwei Lagerstellen gelagert ist. Hierbei ist die Spindellockvorrichtung entweder in einem den beiden Lagerstellen in axialer Richtung der Antriebsspindel nachgelagerten Bereich oder in einer Ebene mit einer am bzw. im Getriebe angeordneten, ersten der beiden Lagerstellen angeordnet.

Nachteilig am Stand der Technik ist, dass Handwerkzeugmaschinen, bei denen die Spindellockvorrichtung in einem den beiden Lagerstellen in axialer Richtung der Antriebsspindel nachgelagerten Bereich angeordnet ist, eine vergleichsweise große Baulänge in axialer Richtung der Antriebsspindel aufweisen. Bei Handwerkzeugmaschinen, bei denen die Spindellockvorrichtung in einer Ebene mit einer am bzw. im Getriebe angeordneten, ersten Lagerstelle angeordnet ist, weist die Antriebsspindel dahingegen ein vergleichsweise großes Kippspiel auf.

Aus GB 2420166 A ist eine Spindelsperre bekannt, bei der ein mit einem zentralen Sternkörper versehener Rollenstern einstückig mit einer Spindel ausgeführt ist. An dem Sternkörper sind in Radialrichtung abstehende Sternfinger einstückig angeformt. In jedem zwischen einer Mitnehmerklaue eines Mitnehmers und einem Sternfinger gebildeten Freiraum, der von außen von einer Klemmfläche des Klemmrings begrenzt ist, ist ein Klemmkörper eingelegt.

In WO 2010/079002 A1 ist eine Spindellockvorrichtung beschrieben, bei der ein Ende der Spindel ein prismatisches Mitnahmeprofil aufweist. Auf abgerundeten Kanten des Mitnahmeprofils ist ein als Antriebsteil dienender Planetenträger geführt. Die zwischen den abgerundeten Kanten liegenden Prismaflächen wirken in einem ersten Teil als Klemmflächen und in einem zweiten Teil als Mitnahmeflächen. Im Bereich der Klemmflächen sind Klemmkörper angeordnet.

Aus EP 2627483 A2 ist ein handgeführtes Elektrowerkzeug mit einem Getriebe, einer Spindellockvorrichtung sowie zwei in einem dem Getriebe nachgelagerten Bereich angeordneten Lagerstellen für die drehbare Lagerung der Antriebsspindel bekannt. Die Spindellockvorrichtung ist in axialer Richtung der Antriebsspindel zwischen den zwei Lagerstellen angeordnet.

### Offenbarung der Erfindung

Eine Aufgabe der Erfindung ist es daher, eine neue Handwerkzeugmaschine mit einer Spindellockvorrichtung bereit zu stellen, die eine verkürzte Baulänge der

Handwerkzeugmaschine bei einer gleichzeitigen Reduzierung des Kippspiels von dessen Antriebsspindel ermöglicht.

Dieses Problem wird gelöst durch eine ¨Handwerkzeugmaschine gemäß dem Patentanspruch 1, mit einem Werkzeuggehäuse, in dem ein Getriebe zur Übertragung eines von einem Antriebsmotor erzeugten Drehmoments auf eine Antriebsspindel angeordnet ist, der eine Spindellockvorrichtung zugeordnet ist. Die Antriebsspindel weist mindestens eine radiale Vertiefung auf, in der mindestens eine der Spindellockvorrichtung zugeordnete Spindelwalze angeordnet ist.

Die Erfindung ermöglicht somit die Bereitstellung einer Handwerkzeugmaschine, bei der durch eine Anordnung der Spindelwalze in einer radialen Vertiefung der Antriebsspindel eine verkürzte Antriebsspindel mit durchgängigem Lagerdurchmesser Anwendung finden kann, um somit eine Reduzierung der Baulänge und des Kippspiels der Antriebsspindel zu ermöglichen.

Erfindungsgemäß ist die Antriebsspindel in dem Werkzeuggehäuse an mindestens zwei Lagerstellen drehbar gelagert. Die mindestens eine radiale Vertiefung ist in axialer Richtung der Antriebsspindel unmittelbar zwischen den zwei Lagerstellen angeordnet.

Somit kann eine Verkürzung der Baulänge der Handwerkzeugmaschine in axialer Richtung der Antriebsspindel auf einfache Art und Weise ermöglicht werden.

Die mindestens zwei Lagerstellen sind in dem Werkzeuggehäuse bevorzugt in einem dem Getriebe nachgelagerten Bereich vorgesehen.

Somit kann eine separat zum Getriebe ausgebildete Spindellockvorrichtung bereitgestellt werden.

Erfindungsgemäß sind in der Antriebsspindel mindestens zwei Mitnahmeelemente zur Übertragung des von dem Antriebsmotor erzeugten Drehmoments auf die Antriebsspindel angeordnet.

Die Erfindung ermöglicht somit eine sichere und zuverlässige Übertragung des von dem Antriebsmotor erzeugten Drehmoments auf die Antriebsspindel.

Erfindungsgemäß greifen in mindestens eine radiale Vertiefung mindestens zwei Mitnahmeelemente zumindest abschnittsweise ein.

Somit kann auf eine einfache Art und Weise eine Anbindung der Mitnahmeelemente an die Spindellockvorrichtung ermöglicht werden.

Die Antriebsspindel weist bevorzugt mindestens zwei axiale Öffnungen auf, durch die die mindestens zwei Mitnahmeelemente in die mindestens eine radiale Vertiefung eingreifen.

Somit kann eine robuste und sichere Wirkverbindung zwischen den Mitnahmeelementen und der Antriebsspindel zum Antrieb der Antriebsspindel ermöglicht werden.

Gemäß einer Ausführungsform ist die mindestens eine Spindelwalze in der mindestens einen radialen Vertiefung in axialer Richtung der mindestens zwei Mitnahmeelemente zumindest abschnittsweise zwischen den mindestens zwei Mitnahmeelementen angeordnet.

Die Erfindung ermöglicht somit die Bereitstellung einer einfachen und kostengünstigen Spindellockvorrichtung.

Gemäß einer Ausführungsform sind die mindestens zwei Mitnahmeelemente dazu ausgebildet, die mindestens eine Spindelwalze bei der Übertragung des von dem Antriebsmotor erzeugten Drehmoments auf die Antriebsspindel in einer Drehbewegung mitzunehmen und bei einer Übertragung eines Drehmoments von der Antriebsspindel auf die mindestens eine Spindelwalze die Antriebsspindel zu blockieren.

Die Erfindung ermöglicht somit die Bereitstellung einer Handwerkzeugmaschine mit einer stabilen und zuverlässigen Spindellockvorrichtung.

Die mindestens eine Spindelwalze ist bevorzugt radial innerhalb eines Blockierglieds gelagert, das dazu ausgebildet ist, ein Ausrutschen der mindestens einen

Spindelwalze aus der mindestens einen radialen Vertiefung in radialer Richtung der Antriebsspindel zu verhindern.

Somit kann die Spindelwalze sicher und stabil in der radialen Vertiefung fixiert werden.

Das Blockierglied ist bevorzugt ringförmig ausgebildet und drehfest mit dem Werkzeuggehäuse verbunden.

Somit kann das Blockierglied auf einfache Art und Weise in dem Werkzeuggehäuse fixiert werden.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
Fig. 1 eine schematische Ansicht einer Handwerkzeugmaschine gemäß der Erfindung,
Fig. 2 eine vergrößerte Schnittansicht eines Ausschnitts der Handwerkzeugmaschine von Fig. 1 mit der Spindellockvorrichtung gemäß einer Ausführungsform,
Fig. 3 eine perspektivische Schnittansicht der Antriebsspindel, des Antriebsglieds, eines Wälzlagers, der Mitnahmeelemente, der Spindelwalzen und des Blockierglieds von Fig. 2,
Fig. 4 eine perspektivische Ansicht der Antriebsspindel von Fig. 2 und 3, und
Fig. 5 eine perspektivische Ansicht der Antriebsspindel, des Antriebsglieds, eines Wälzlagers, der Mitnahmeelemente, der Spindelwalzen und des Blockierglieds von Fig. 2.

### Beschreibung der Ausführungsbeispiele

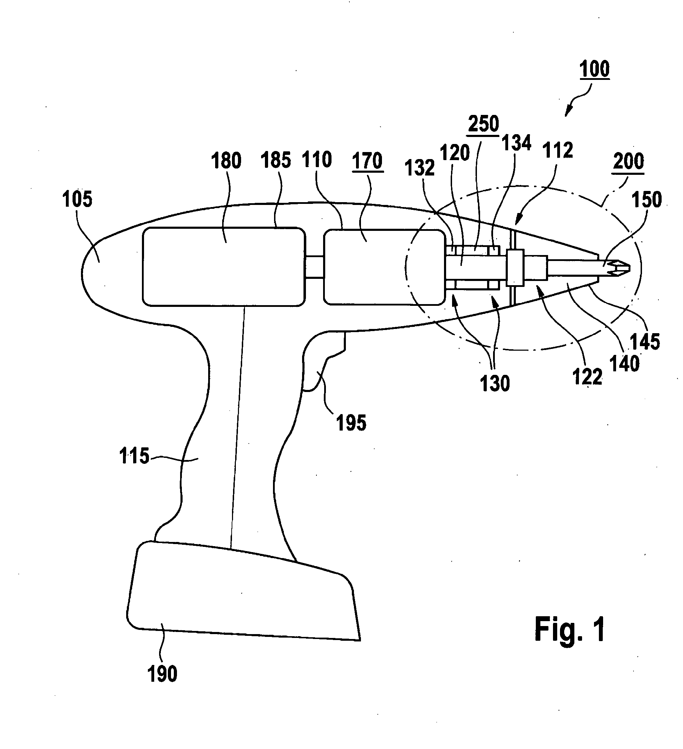

Fig. 1 zeigt eine beispielhaft als handgeführtes Elektrowerkzeug ausgebildete Handwerkzeugmaschine 100, die ein Werkzeuggehäuse 105 mit einem Handgriff 115 aufweist. Gemäß einer Ausführungsform ist die Handwerkzeugmaschine 100 zur netzunabhängigen Stromversorgung mechanisch und elektrisch mit einem Akkupack 190 verbindbar. In Fig. 1 ist die Handwerkzeugmaschine 100 beispielhaft als Akku-Bohrschrauber ausgebildet. Es wird jedoch darauf hingewiesen, dass die vorliegende Erfindung nicht auf Akku-Bohrschrauber beschränkt ist, sondern vielmehr bei unterschiedlichen Handwerkzeugmaschinen Anwendung finden kann, bei denen ein Werkzeug in Drehungen versetzt wird, unabhängig davon, ob die Handwerkzeugmaschine netzunabhängig mit einem Akkupack oder netzabhängig betreibbar ist, z. B. bei einem Akku-Schrauber, einer Schlagbohrmaschine etc.

In dem Werkzeuggehäuse 105 sind ein von dem Akkupack 190 mit Strom versorgter, elektrischer Antriebsmotor 180 und ein Getriebe 170 angeordnet. Der Antriebsmotor 180 ist über das Getriebe 170 mit einer Antriebswelle 120, z. B. einer Antriebsspindel, verbunden und illustrativ in einem Motorgehäuse 185 angeordnet. Das Getriebe 170 ist in einem Getriebegehäuse 110 angeordnet und zur Übertragung eines von dem Antriebsmotor 180 erzeugten Drehmoments auf die Antriebsspindel 120 ausgebildet. Das Getriebegehäuse 110 und das Motorgehäuse 185 sind beispielhaft in dem Werkzeuggehäuse 105 angeordnet.

Der Antriebsmotor 180 ist z. B. über einen Handschalter 195 betätigbar, d. h. ein- und ausschaltbar, und kann ein beliebiger Motortyp sein, z. B. ein elektronisch kommutierter Motor oder ein Gleichstrommotor. Vorzugsweise ist der Antriebsmotor 180 derart elektronisch steuer- bzw. regelbar, dass sowohl ein Reversierbetrieb, als auch Vorgaben hinsichtlich einer gewünschten Drehgeschwindigkeit realisierbar sind. Die Funktionsweise und der Aufbau eines geeigneten Antriebsmotors sind aus dem Stand der Technik hinreichend bekannt, sodass hier zwecks Knappheit der Beschreibung auf eine eingehende Beschreibung verzichtet wird.

Die Antriebsspindel 120 ist über eine Lageranordnung 130 drehbar im Gehäuse 105 gelagert und mit einer Werkzeugaufnahme 140 versehen, die im Bereich einer Stirnseite 112 des Gehäuses 105 angeordnet ist und beispielhaft ein Bohrfutter 145 aufweist. Die Werkzeugaufnahme 140 dient zur Aufnahme eines Werkzeugs 150 und kann an die Antriebsspindel 120 angeformt sein oder aufsatzförmig mit dieser verbunden sein. In Fig. 1 ist die Werkzeugaufnahme 140 beispielhaft aufsatzartig ausgebildet und über eine an der Antriebsspindel 120 vorgesehene Befestigungsvorrichtung 122 an dieser befestigt.

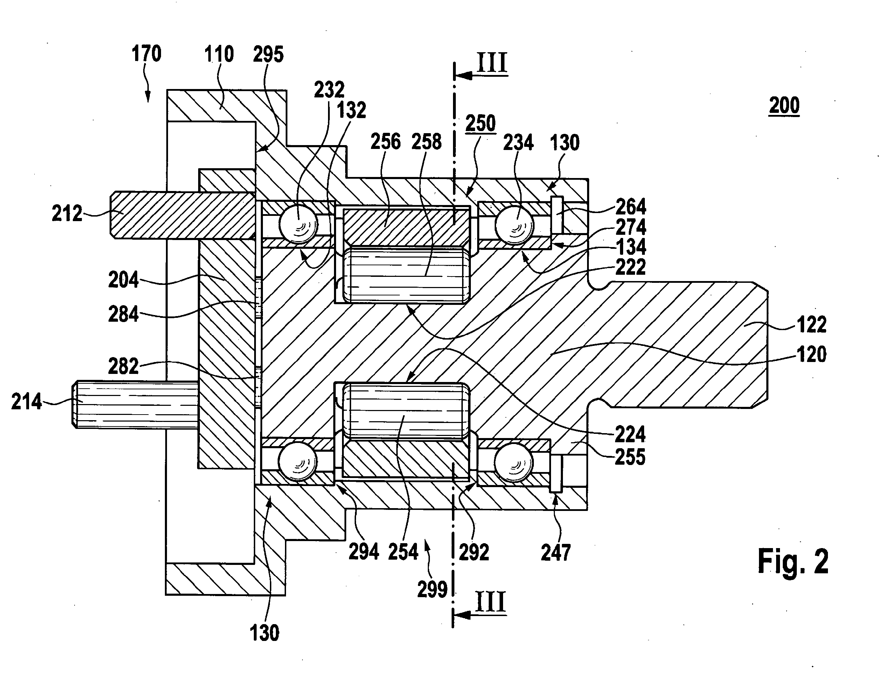

Die Lageranordnung 130 weist gemäß einer Ausführungsform mindestens zwei Lagerstellen 132, 134 auf, die in dem Werkzeuggehäuse 105 in einem dem Getriebe 170 nachgelagerten Bereich 299 vorgesehen sind. An den Lagerstellen 132, 134 sind zugeordnete Lagerelemente (z. B. 232, 234 in Fig. 2) angeordnet, die als Spindellager dienen und in denen die Antriebsspindel 120 drehbar gelagert ist.

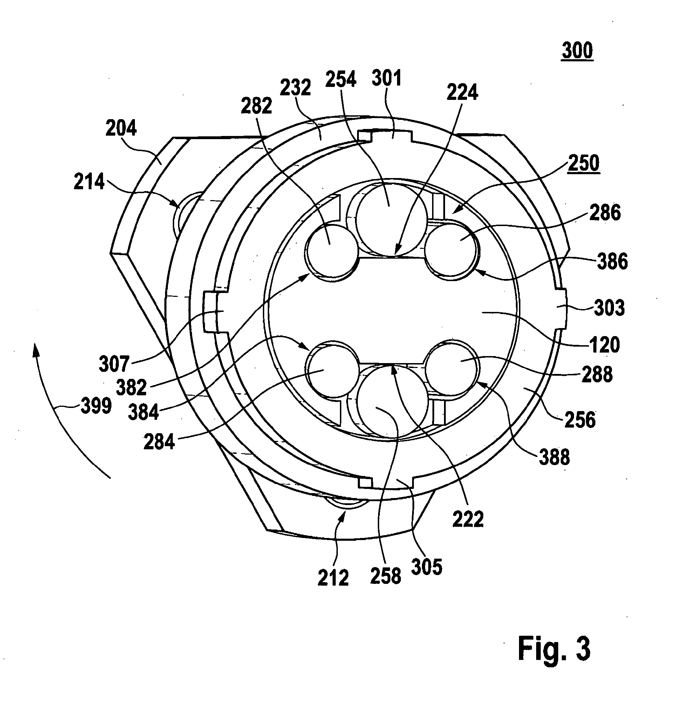

Erfindungsgemäß ist der Antriebsspindel 120 eine Spindellockvorrichtung 250 zugeordnet. Diese ist in axialer Richtung der Antriebsspindel 120 zwischen den zwei Lagerstellen 132, 134 angeordnet, bevorzugt unmittelbar, und dient zur Zentrierung der Antriebsspindel 120 bei ausgeschaltetem Antriebsmotor 180, wie unten bei Fig. 3 beschrieben.

Fig. 2 zeigt den Ausschnitt 200 des handgeführten Elektrowerkzeugs 100 von Fig. 1, bei dem zwecks Klarheit und Einfachheit der Zeichnung auf eine Darstellung des Werkzeugs 150 und der Werkzeugaufnahme 140 sowie des Werkzeuggehäuses 105 von Fig. 1 verzichtet wurde. Der Ausschnitt 200 verdeutlicht eine beispielhafte Ausgestaltung der Antriebsspindel 120, der Lageranordnung 130, sowie der Spindellockvorrichtung 250, die illustrativ zumindest abschnittsweise in dem Getriebegehäuse 110 des Getriebes 170 angeordnet sind. Im Inneren des Getriebegehäuses 110 sind illustrativ eine erste Umlaufschulter 295, eine zweite Umlaufschulter 294, ein Ringkragen 292 sowie eine Ringnut 247 ausgebildet, wie unten stehend beschrieben.

Es wird jedoch darauf hingewiesen, dass die Funktion des Getriebegehäuses 110 auch von dem Werkzeuggehäuse 105 von Fig. 1 übernommen werden kann. Anders ausgedrückt können somit sowohl die Antriebsspindel 120 als auch die Lageranordnung 130 und die Spindellockvorrichtung 250 zumindest abschnittweise unmittelbar im Werkzeuggehäuse 105 von Fig. 1 angeordnet sein.

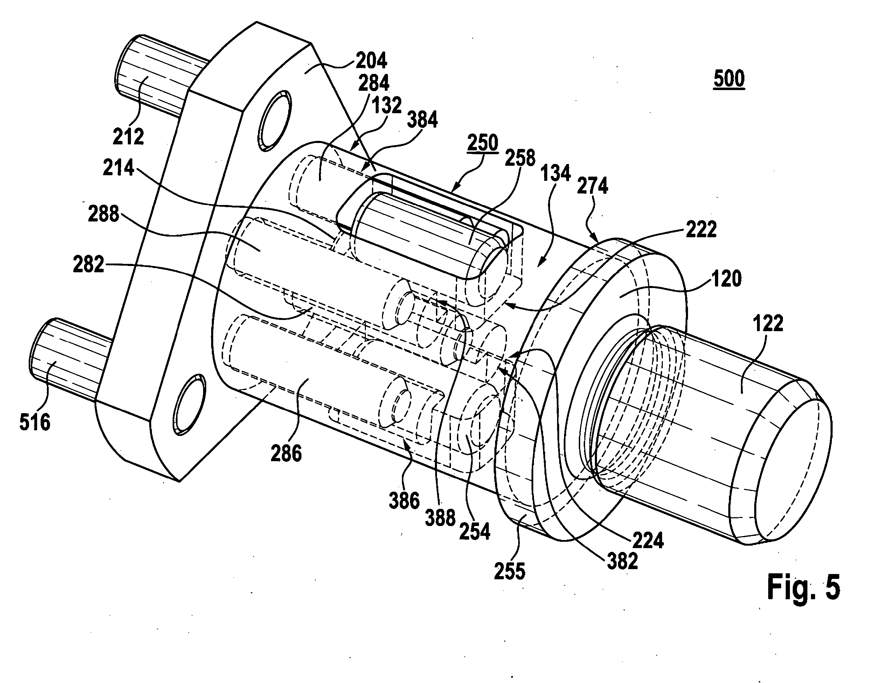

Gemäß einer Ausführungsform ist das Getriebe 170 ein mit verschiedenen Gang- bzw. Planetenstufen ausgebildetes Planetengetriebe, das im Betrieb der Handwerkzeugmaschine 100 von Fig. 1 vom Antriebsmotor 180 von Fig. 1 drehend angetrieben wird. Das Getriebe 170 weist beispielhaft ein scheibenförmiges Mitnehmerglied 204 auf, das das Drehmoment des Antriebsmotors 180 von Fig. 1 über zugeordnete, bolzenartige Mitnahmeelemente 282, 284 (und 286, 288 in Fig. 3) auf die Antriebsspindel 120 überträgt, wie unten bei Fig. 3 beschrieben, um die Antriebsspindel 120 drehend anzutreiben. Hierzu ist die Mitnehmerscheibe 204 z. B. über zugeordnete Halte- und Mitnahmebolzen 212, 214 (und 516 in Fig. 5) mit einem entsprechenden Antriebsglied des Getriebes 170 verbunden, beispielsweise mit einem zugeordneten Planetenträger. Alternativ hierzu kann der zugeordnete Planetenträger die Mitnehmerscheibe 204 ausbilden, sodass die Halte- und Mitnahmebolzen 212, 214 (und 516 in Fig. 5) z. B. als Lager für zugeordnete Planetenräder dienen. Die Mitnahmeelemente 282, 284 (286, 288 in Fig. 3) können auf eine beliebige Art und Weise an der Mitnehmerscheibe 204 befestigt sein, z. B. durch Schweißen, oder an diese angeformt bzw. einstückig mit dieser ausgebildet sein.

Da der Aufbau eines Planetengetriebes dem Fachmann hinreichend bekannt ist, wird hier zwecks Knappheit der Beschreibung auf eine eingehende Beschreibung und Darstellung des Planetengetriebes verzichtet. Es wird jedoch darauf hingewiesen, dass die Beschreibung der Verwendung eines Planetengetriebes lediglich beispielhaften Charakter hat und nicht als Einschränkung der Erfindung zu verstehen ist. Diese kann vielmehr bei unterschiedlichen Getriebetypen Anwendung finden, mit denen das Drehmoment des Antriebsmotors 180 von Fig. 1 auf die Antriebsspindel 120 übertragbar ist, um diese drehend anzutreiben.

Gemäß einer Ausführungsform weist die Antriebsspindel 120 einen durchgängigen Lagerdurchmesser auf und ist illustrativ an den zwei Lagerstellen 132, 134 über zwei zugeordnete Lagerelemente 232 bzw. 234 drehbar im Getriebegehäuse 110 und somit im Werkzeuggehäuse 105 von Fig. 1 gelagert, sodass die Arbeitsspindel 120 verbesserte Rundlaufeigenschaften aufweist. Die erste Lagerstelle 132 ist in Richtung der Werkzeugaufnahme 140 von Fig. 1 gesehen der Mitnehmerscheibe 204 und somit dem Getriebe 170 bevorzugt unmittelbar nachgelagert. Die zweite Lagerstelle 134 ist in Richtung der Werkzeugaufnahme 140 von Fig. 1 gesehen von der Mitnehmerscheibe 204 und somit vom Getriebe 170 beabstandet.

Die Lagerelemente 232, 234 sind beispielhaft als Wälzlager ausgebildet, z. B. Kugellager. Es sind jedoch auch andere Lagertypen verwendbar, z. B. Gleitlager. Das erste Kugellager 232 ist illustrativ an der ersten Lagerstelle 132 zwischen der Mitnehmerscheibe 204 und der ersten Umlaufschulter 294 im Getriebegehäuse 110 angeordnet, z. B. eingepresst oder mittels Kunststoffspritzen eingespritzt. Das zweite Kugellager 234 ist illustrativ an der zweiten Lagerstelle 134 zwischen dem Ringkragen 292 und einer in der Ringnut 247 befestigten Ringscheibe 264 angeordnet, z. B. eingepresst oder mittels Kunststoffspritzen eingespritzt.

Zwischen den Lagerstellen 132, 134 weist die Antriebsspindel 120 beispielhaft zwei radiale Vertiefungen 222, 224 auf, die unmittelbar zwischen den Lagerstellen 132, 134 angeordnet sind. Darüber hinaus weist die Antriebsspindel 120 wie bei Fig. 1 beschrieben die Befestigungsvorrichtung 122 auf, an der das Bohrfutter 145 der Werkzeugaufnahme 140 von Fig. 1 befestigbar ist und die z. B. als Außengewinde ausgebildet sein kann. Des Weiteren ist an der Antriebsspindel 120 ein Abstützflansch 255 vorgesehen, der eine Ringschulter 274 ausbildet und in axialer Richtung der Antriebsspindel 120 die zweite Lagerstelle 134 von der Befestigungsvorrichtung 122 trennt. Gegen die Ringschulter 274 liegt beispielhaft ein Innenring des zweiten Kugellagers 234 an.

Gemäß einer Ausführungsform weist die Spindellockvorrichtung 250 mindestens eine, illustrativ zwei Spindelwalzen 254, 258 auf, die in den radialen Vertiefungen 222 bzw. 224 angeordnet sind, in die auch die Mitnahmebolzen 284 (und 288 in Fig. 3) bzw. 282 (und 286 in Fig. 3) zumindest teilweise eingreifen, wie unten bei Fig. 3 beschrieben. Die Spindelwalzen 254, 258 sind innerhalb eines ringförmigen Blockierglieds 256 angeordnet, das ebenfalls der Spindellockvorrichtung 250 zugeordnet und dazu ausgebildet ist, ein Ausrutschen der Spindelwalzen 254, 258 aus den radialen Vertiefungen 224 bzw. 222 in radialer Richtung der Antriebsspindel 120 zu verhindern.

Der Blockierring 256 ist drehfest mit dem Werkzeuggehäuse 105 verbunden, z. B. in das Getriebegehäuse 110 eingepresst, wobei sowohl in axialer als auch in radialer Richtung innerhalb vorgegebener Toleranzen ein entsprechendes Spiel vorhanden sein kann. Alternativ hierzu kann der Blockierring 256 spielfrei mit dem Getriebegehäuse 110 verbunden sein. Beispielsweise kann der Blockierring 256 einstückig mit dem Getriebegehäuse 110 ausgebildet oder z. B. als Einlegeteil, welches umspritzt wird, an dieses angeformt sein. Illustrativ ist der Blockierring 256 zwischen dem ersten Kugellager 232 und dem Ringkragen 292 angeordnet.

Fig. 3 zeigt eine Anordnung 300 mit der Antriebsspindel 120, die die radialen Vertiefungen 222, 224 aufweist, der Mitnehmerscheibe 204, an der die Halte- und Mitnahmebolzen 212, 214 befestigt sind, dem Kugellager 232, den Mitnahmebolzen 282, 284, den Spindelwalzen 254, 258 und dem Blockierring 256 von Fig. 2. Darüber hinaus zeigt Fig. 3 illustrativ radial auswärts gerichtete Vorsprünge 301, 303, 305, 307 am Blockierring 256 sowie illustrativ nach Art von Langlöchern ausgebildete, axiale Öffnungen 382, 384, 386, 388 in der Antriebsspindel 120, durch die die an der Mitnehmerscheibe 204 befestigten Mitnahmebolzen 282, 284 sowie weitere Mitnahmebolzen 286, 288 in die radialen Vertiefungen 222, 224 eingreifen.

Die radial auswärts gerichteten Vorsprünge 301, 303, 305, 307 des Blockierrings 256 sind dazu ausgebildet, in zugeordnete Haltenuten einzugreifen, die z. B. im Getriebegehäuse 110 vorgesehen sind. Somit kann der Blockierring 256 wie bei Fig. 2 beschrieben drehfest im Getriebegehäuse 110 befestigt werden.

Gemäß einer Ausführungsform sind die Mitnahmebolzen 282, 284, 286, 288 in den axialen Öffnungen 382, 384, 386 388 mit einem innerhalb vorgegebener Toleranzen ausgestalteten, radialen Spiel gelagert, sodass die Mitnahmebolzen 282, 288 bzw. 284, 286 bei einer Verdrehung der Antriebsspindel 120 relativ zur Mitnehmerscheibe 204 zumindest abschnittsweise aus den zugeordneten axialen Öffnungen 382, 388, 384, 386 in Richtung der zugeordneten radialen Vertiefungen 222, 224 verschiebbar sind. In den radialen Vertiefungen 222, 224 sind die Spindelwalzen 258 bzw. 254 in axialer Richtung der Mitnahmebolzen 284, 288 bzw. 282, 286 zumindest abschnittsweise zwischen diesen Mitnahmebolzen 284, 288 bzw. 282, 286 angeordnet.

Im Normalbetrieb der Handwerkzeugmaschine 100 von Fig. 1 wird ein von dem Antriebsmotor 180 von Fig. 1 erzeugtes Drehmoment auf die Mitnehmerscheibe 204 übertragen, die dieses Drehmoment über die Mitnahmebolzen 282, 284, 286, 288 auf die Antriebsspindel 120 überträgt, um diese somit in einer Drehbewegung mitzunehmen bzw. in Drehung zu versetzen. Hierbei werden die Spindelwalzen 254, 258 von den Mitnahmebolzen 282, 286 bzw. 284, 288 mitgenommen und drehen sich somit mit den Mitnahmebolzen 282, 284, 286, 288 und der Antriebsspindel 120 im Inneren des Blockierrings 256.

Falls bei ausgeschaltetem Antriebsmotor 180 von Fig. 1 ein Drehmoment auf die Antriebsspindel 120 einwirkt, wird diese durch die Spindellockvorrichtung 250 in einer vorgegebenen Position arretiert bzw. zentriert. Hierbei wird die Antriebsspindel 120 durch das einwirkende Drehmoment entgegen der Mitnehmerscheibe 204 verdreht, sodass zwischen den Spindelwalzen 254, 258, dem Blockierring 256, den radialen Vertiefungen 224 bzw. 222 und den zugeordneten Mitnahmebolzen 282, 288 oder 284, 286 ein Keilwinkel entsteht, der eine weitere Verdrehung der Antriebsspindel 120 blockiert bzw. verhindert und das einwirkende Drehmoment in das Getriebegehäuse 110 einleitet.

Anders ausgedrückt wird die Antriebsspindel 120 zunächst durch das auf diese einwirkende Drehmoment relativ zur stillstehenden Mitnehmerscheibe 204 verdreht, sodass die Mitnahmebolzen 282, 288 oder 284, 286 quer zur axialen Erstreckung der radialen Vertiefungen 222 bzw. 224 zumindest abschnittsweise weiter in diese hinein bewegt werden, d. h. in Fig. 3 im oder gegen den Uhrzeigersinn. Beispielsweise werden bei einer Verdrehung der Antriebsspindel 120 - in Fig. 3 - im Uhrzeigersinn, wie mit einem Pfeil 399 angedeutet, die Mitnahmebolzen 284, 286 abschnittsweise weiter in die radialen Vertiefungen 222 bzw. 224 bewegt, während die Mitnahmebolzen 288, 282 weiter in deren zugeordnete axiale Öffnungen 388 bzw. 382 bewegt werden. Hierbei werden die Spindelwalzen 258, 254 durch ihre Anlageflächen in den radialen Vertiefungen 222 bzw. 224 gegen den drehfesten Blockierring 256 gedrückt und blockieren somit eine weitere Verdrehung der Antriebsspindel 120. Bei einer Verdrehung der Antriebsspindel 120 - in Fig. 3 - gegen den Uhrzeigersinn, d. h. gegen die durch den Pfeil 399 gekennzeichnete Drehrichtung, wird die Antriebsspindel 120 auf analoge Art und Weise arretiert bzw. zentriert.

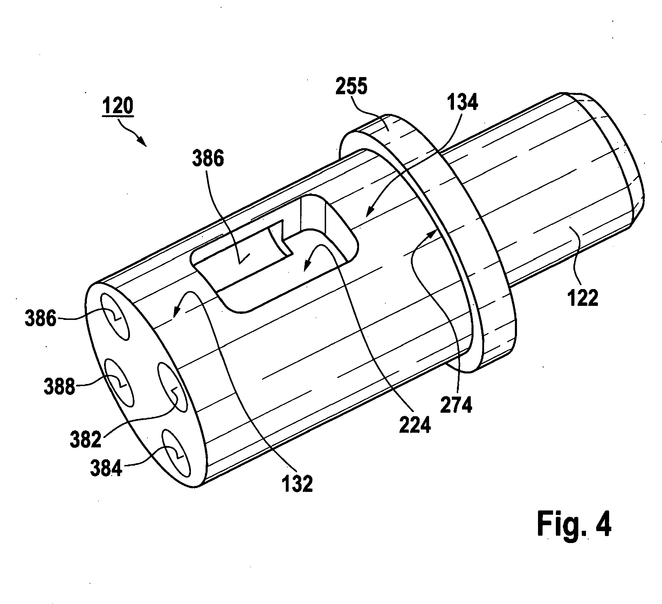

Fig. 4 zeigt eine beispielhafte Ausgestaltung der Antriebsspindel 120 mit den axialen Öffnungen 382, 384, 386, 388 und der radialen Vertiefung 224. Fig. 4 verdeutlicht die axiale Erstreckung der axialen Öffnung 386 bis in die radiale Vertiefung 224 hinein.

Fig. 5 zeigt eine perspektivische Darstellung 500 der Anordnung 300 von Fig. 3. Fig. 5 verdeutlicht die über die axialen Öffnungen 382, 384, 386, 388 in die radialen Vertiefungen 222, 224 eingreifenden Mitnahmebolzen 284, 288 bzw. 282, 286, zwischen denen die Spindelwalzen 258 bzw. 254 gelagert sind. Darüber hinaus zeigt Fig. 5 einen zusätzlichen Halte- und Mitnahmebolzen 516, der wie die Halte- und Mitnahmebolzen 212, 214 von Fig. 2 an der Mitnehmerscheibe 204 befestigt ist.

## Patentansprüche

1. Handwerkzeugmaschine (100) mit einem Werkzeuggehäuse (105), in dem ein Getriebe (170) zur Übertragung eines von einem Antriebsmotor (180) erzeugten Drehmoments auf eine Antriebsspindel (120) angeordnet ist, der eine Spindellockvorrichtung (250) zugeordnet ist, wobei die Antriebsspindel (120) mindestens eine radiale Vertiefung (222, 224) aufweist, in der mindestens eine der Spindellockvorrichtung (250) zugeordnete Spindelwalze (254, 258) angeordnet ist, **dadurch gekennzeichnet, dass** die Antriebsspindel (120) in dem Werkzeuggehäuse (105) an mindestens zwei Lagerstellen (132, 134) drehbar gelagert ist, wobei die mindestens eine radiale Vertiefung (222, 224) in axialer Richtung der Antriebsspindel (120) unmittelbar zwischen den zwei Lagerstellen (132, 134) angeordnet ist, und in der Antriebsspindel (120) mindestens zwei Mitnahmeelemente (282, 284, 286, 288) zur Übertragung des von dem Antriebsmotor (180) erzeugten Drehmoments auf die Antriebsspindel (120) angeordnet sind, wobei in mindestens eine radiale Vertiefung (222, 224) mindestens zwei Mitnahmeelemente (282, 284, 286, 288) zumindest abschnittsweise eingreifen.

2. Handwerkzeugmaschine nach Anspruch 1, **dadurch gekennzeichnet, dass** die mindestens zwei Lagerstellen (132, 134) in dem Werkzeuggehäuse (105) in einem dem Getriebe (170) nachgelagerten Bereich (299) vorgesehen sind.

3. Handwerkzeugmaschine nach einem der Ansprüche 1 oder 2, **dadurch gekennzeichnet, dass** die Antriebsspindel (120) mindestens zwei axiale Öffnungen (382, 384, 386, 388) aufweist, durch die die mindestens zwei Mitnahmeelemente (282, 284, 286, 288) in die mindestens eine radiale Vertiefung (222, 224) eingreifen.

4. Handwerkzeugmaschine nach einem der vorhergehenden Ansprüche, **dadurch gekennzeichnet, dass** die mindestens eine Spindelwalze (254, 258) in der mindestens einen radialen Vertiefung (222, 224) in axialer Richtung der mindestens zwei Mitnahmeelemente (282, 284, 286, 288) zumindest abschnittsweise zwischen den mindestens zwei Mitnahmeelementen (282, 284, 286, 288) angeordnet ist.

5. Handwerkzeugmaschine nach Anspruch 4, **dadurch gekennzeichnet, dass** die mindestens zwei Mitnahmeelemente (282, 284, 286, 288) dazu ausgebildet sind, die mindestens eine Spindelwalze (254, 258) bei der Übertragung des von dem Antriebsmotor (180) erzeugten Drehmoments auf die Antriebsspindel (120) in einer Drehbewegung mitzunehmen und bei einer Übertragung eines Drehmoments von der Antriebsspindel (120) auf die mindestens eine Spindelwalze (254, 258) die Antriebsspindel (120) zu blockieren.

6. Handwerkzeugmaschine nach einem der vorhergehenden Ansprüche, **dadurch gekennzeichnet, dass** die mindestens eine Spindelwalze (254, 258) radial innerhalb eines Blockierglieds (256) gelagert ist, das dazu ausgebildet ist, ein Ausrutschen der mindestens einen Spindelwalze (254) aus der mindestens einen radialen Vertiefung (222, 224) in radialer Richtung der Antriebsspindel (120) zu verhindern.

7. Handwerkzeugmaschine nach Anspruch 6, **dadurch gekennzeichnet, dass** das Blockierglied (256) ringförmig ausgebildet ist und drehfest mit dem Werkzeuggehäuse (105) verbunden ist.

8. Handwerkzeugmaschine nach Anspruch 7, **dadurch gekennzeichnet, dass** das Blockierglied (256) radial auswärts gerichtete Vorsprünge (301, 301, 305, 307) zur drehfesten Verbindung mit dem Werkzeuggehäuse (105) aufweist, die dazu ausgebildet sind, in zugeordnete Haltenuten einzugreifen.

9. Handwerkzeugmaschine nach einem der vorhergehenden Ansprüche, **dadurch gekennzeichnet, dass** das Getriebe (170) ein scheibenförmiges Mitnehmerglied (204) aufweist und die Mitnahmeelemente (282, 284, 286, 288) dem scheibenförmigen Mitnehmerglied (204) zugeordnet sind, wobei das Mitnehmerglied (204) über die bolzenartigen Mitnahmeelemente (282, 284, 286, 288) das Drehmoment des Antriebsmotors (180) auf die Antriebsspindel (120) überträgt.

10. Handwerkzeugmaschine nach einem der vorhergehenden Ansprüche, **dadurch gekennzeichnet, dass** die Antriebsspindel (120) einen durchgängigen Lagerdurchmesser aufweist.

## Claims

1. Portable power tool (100) having a tool housing (105) in which there is arranged a transmission (170) for transmitting a torque generated by a drive motor (180) to a drive spindle (120) to which a spindle locking device (250) is assigned, wherein the drive spindle (120) has at least one radial depression (222, 224) in which at least one spindle roller (254, 258) assigned to the spindle locking device (250) is arranged, **characterized in that** the drive spindle (120) is rotatably mounted in the tool housing (105) at at least two bearing points (132, 134) ; wherein the at least one radial depression (222, 224) is arranged immediately between the two bearing points (132, 134) in the axial direction of the drive spindle (120), and at least two entrainment elements (282, 284, 286, 288) for transmitting the torque generated by the drive motor (180) to the drive spindle (120) are arranged in the drive spindle (120), wherein at least two entrainment elements (282, 284, 286, 288) engage at least regionally into at least one radial depression (222, 224).

2. Portable power tool according to Claim 1, **characterized in that** the at least two bearing points (132, 134) are provided in the tool housing (105) in a region (299) downstream of the transmission (170).

3. Portable power tool according to either of Claims 1 and 2, **characterized in that** the drive spindle (120) has at least two axial openings (382, 384, 386, 388) through which the at least two entrainment elements (282, 284, 286, 288) engage in the at least one radial depression (222, 224).

4. Portable power tool according to one of the preceding claims, **characterized in that** the at least one spindle roller (254, 258) is arranged at least regionally between the at least two entrainment elements (282, 284, 286, 288), in the axial direction of the at least two entrainment elements (282, 284, 286, 288), in the at least one radial depression (222, 224).

5. Portable power tool according to Claim 4, **characterized in that** the at least two entrainment elements (282, 284, 286, 288) are configured to drive the at least one spindle roller (254, 258) in a rotary movement when the torque generated by the drive motor (180) is transmitted to the drive spindle (120), and to block the drive spindle (120) when a torque is transmitted from the drive spindle (120) to the at least one spindle roller (254, 258).

6. Portable power tool according to one of the preceding claims, **characterized in that** the at least one spindle roller (254, 258) is mounted radially inside a blocking member (256) which is configured to prevent the at least one spindle roller (254) from slipping out of the at least one radial depression (222, 224) in the radial direction of the drive spindle (120).

7. Portable power tool according to Claim 6, **characterized in that** the blocking member (256) is configured in an annular manner and is connected to the tool housing (105) in a rotationally fixed manner.

8. Portable power tool according to Claim 7, **characterized in that** the blocking member (256) has protrusions (301, 303, 305, 307) that are directed radially outwards for connecting to the tool housing (105) in a rotationally fixed manner, said protrusions (301, 303, 305, 307) being configured to engage in associated retaining grooves.

9. Portable power tool according to one of the preceding claims, **characterized in that** the transmission (170) has a disc-like entraining member (204) and the entrainment elements (282, 284, 286, 288) are assigned to the disc-like entraining member (204), wherein the entraining member (204) transmits the torque of the drive motor (180) to the drive spindle (120) via the pin-like entrainment elements (282, 284, 286, 288).

10. Portable power tool according to one of the preceding claims, **characterized in that** the drive spindle (120) has a constant bearing diameter.

## Revendications

1. Machine-outil à main (100) avec un boîtier d'outil (105, dans lequel est disposé un mécanisme (170) pour la transmission d'un couple de rotation produit par un moteur d'entraînement (180) à une broche d'entraînement (120), à laquelle est associé un dispositif de blocage de broche (250), dans laquelle la broche d'entraînement (120) présente au moins un creux radial (222, 224), dans lequel au moins un rouleau de broche (254, 258) associé au dispositif de blocage de broche (250) est disposé, **caractérisée en ce que** la broche d'entraînement (120) est montée de façon rotative sur au moins deux points d'appui (132, 134) dans le boîtier d'outil (105), dans laquelle ledit au moins un creux radial (222, 224) est disposé dans la direction radiale de la broche d'entraînement (120) immédiatement entre les deux points d'appui (132, 134), et au moins deux éléments d'entraînement (282, 284, 286, 288) sont disposés dans la broche d'entraînement (120) pour la transmission du couple de rotation produit par le moteur d'entraînement (180) à la broche d'entraînement (120), dans laquelle au moins deux éléments d'entraînement (282, 284, 286, 288) s'engagent au moins localement dans au moins un creux radial (222, 224).

2. Machine-outil à main selon la revendication 1, **caractérisée en ce que** lesdits au moins deux points d'appui (132, 134) sont prévus dans le boîtier d'outil (105) dans une région (299) située après le mécanisme (170).

3. Machine-outil à main selon l'une des revendications 1 ou 2, **caractérisée en ce que** la broche d'entraînement (120) présente au moins deux ouvertures axiales (382, 384, 386, 388), à travers lesquelles lesdits au moins deux éléments d'entraînement (282, 284, 286, 288) s'engagent dans ledit au moins un creux radial (222, 224).

4. Machine-outil à main selon l'une quelconque des revendications précédentes, **caractérisée en ce que** ledit au moins un rouleau de broche (254, 258) est disposé dans ledit au moins un creux radial (222, 224) en direction axiale desdits au moins deux éléments d'entraînement (282, 284, 286, 288) au moins localement entre lesdits au moins deux éléments d'entraînement (282, 284, 286, 288).

5. Machine-outil à main selon la revendication 4, **caractérisée en ce que** lesdits au moins deux éléments d'entraînement (282, 284, 286, 288) sont configurés de façon à entraîner ledit au moins un rouleau de broche (254, 258) dans un mouvement de rotation lors de la transmission du couple de rotation produit par le moteur d'entraînement (180) à la broche d'entraînement (120) et à bloquer la broche d'entraînement (120) lors d'une transmission d'un couple de rotation de la broche d'entraînement (120) audit au moins un rouleau de broche (254, 258).

6. Machine-outil à main selon l'une quelconque des revendications précédentes, **caractérisée en ce que** ledit au moins un rouleau de broche (254, 258) est monté radialement à l'intérieur d'un organe de blocage (256), qui est configuré pour empêcher un glissement dudit au moins un rouleau de broche (254) hors dudit au moins un creux radial (222, 224) en direction radiale de la broche d'entraînement (120).

7. Machine-outil à main selon la revendication 6, **caractérisée en ce que** l'organe de blocage (256) est de forme annulaire et est calé en rotation avec le boîtier d'outil (105).

8. Machine-outil à main selon la revendication 7, **caractérisée en ce que** l'organe de blocage (256) présente des saillies orientées radialement vers l'extérieur (301, 303, 305, 307) pour la liaison calée en rotation avec le boîtier d'outil (105), qui sont configurées pour s'engager dans des rainures de maintien associées.

9. Machine-outil à main selon l'une quelconque des revendications précédentes, **caractérisée en ce que** le mécanisme (170) présente un organe d'entraînement (204) en forme de disque et les éléments d'entraînement (282, 284, 286, 288) sont associés à l'organe d'entraînement en forme de disque (204), dans laquelle l'organe d'entraînement (204) transmet le couple de rotation du moteur d'entraînement (180) à la broche d'entraînement (120) via les éléments d'entraînement en forme de boulons (282, 284, 286, 288).

10. Machine-outil à main selon l'une quelconque des revendications précédentes, **caractérisée en ce que** la broche d'entraînement (120) présente un diamètre de palier continu.
